# EUROPEAN PATENT APPLICATION

(11) **EP 1 046 541 A1**
(43) Date of publication of application: **25.10.2000**
(21) Application number: 99303037.8
(22) Date of filing: 20.04.1999
(51) Int. Cl.: B60N 2/48

(54) **Adjusting mechanism for a vehicle's seat headrest**

(71) Applicant: RAVIV PRECISION INJECTION MOLDING, D.N. Halutza 85515 (IL)
(72) Inventor: Halamish, Asaf, Karkur 37063 (IL)
(74) Representative: Price, Paul Anthony King

(57) **Abstract**

A head rest support mechanism for a vehicle seat, the head rest being fitted with at least one support rod having a plurality of notches and being supported by the seat back and adapted for vertical adjustment with respect thereto, the support mechanism further including a guiding member fixed to the seat back and comprising a bore slidingly and snugly supporting the support rod. There is a latching spring supported by the guiding member and having one end fixed to the guiding member, an other end projecting from the guiding member, and an intermediate, looped, notch engaging portion being normally biased to engage a portion of a notch. The support rod comprises a plurality of notches each lying in a plane which is perpendicular to a longitudinal axis of the rod and a normal of the plane is not perpendicular to the longitudinal axis. The arrangement is such that axial displacement of the support rod in an upward direction entails lateral displacement of the notch engaging portion so as to disengage from the notch, and downward displacement of the supporting rod is possible only upon laterally displacing the notch engaging portion by expelling the projecting end of the latching spring.

## Description

### FIELD OF THE INVENTION

The present invention is in the field of headrest of vehicle seats, and more particularly it is concerned with an improved mechanism for vertical adjustment and restraint of a headrest.

### BACKGROUND OF THE INVENTION

Vehicle seats are designed in accordance with ergonomic requirements and in accordance with strict safety requirements defining the strength which must be met by the seat components in case of collision. Seats must be designed such that vehicle occupants with different body dimensions do not suffer from driving fatigue, on the one hand, and on the other hand, in case of collision, suitable protection and body support is provided.

The headrest of a vehicle seat, apart from serving as a head support for comfort and preventing driving fatigue, has an important role in preventing so-called *whiplash -* type injuries of a person's head in case of collision.

It is accordingly important that the headrest be adjustable in height, so as to meet the specific personal body dimensions of a vehicle's occupant and that in case of sudden impact the head rest does not spontaneously change its position.

Heretofore, a variety of mechanisms have been provided for adjusting the height of a headrest support of a vehicle's seat

One way of controlling vertical adjustment is by providing some friction means between the headrest support rods and a housing member mounted within a back rest portion of the vehicle's seat However, a serious drawback of such mechanisms is that friction conditions may change and accordingly positioning of the headrest may unintentionally be changed.

Other means for vertically adjusting a headrest are disclosed, for example, in U.S. Patent No.5,156,440, wherein the support rod comprises a plurality of V-shaped notches engageable by a wire spring. However, the disclosure according to this patent provides vertical displacement of the headrest, in both directions (i.e. upwards and downwards) by applying sufficient force in a vertical direction by the occupant. According to this Patent there are no means for unequivocal restraining the head rest at least in a downward direction, an accordingly there are no provisions of any manually operated release means for selectively adjusting the head rest. The drawback involved with such an arrangement is that in case of collision the headrest may unintentionally change its vertical position in a downward direction, possibly causing severe injury by failing to support an occupants head.

It is the object of the present invention to provide a new and improved headrest support mechanism for adjusting the vertical position of a headrest of a vehicle seat.

### BRIEF DESCRIPTION OF THE INVENTION

According to the present invention, there is provided an adjusting mechanism for a headrest of a vehicle seat, the head rest being fitted with at least one support rod supported by a seat back of the seat and adapted for vertical adjustment with respect thereto, said adjusting mechanism comprising:
a guiding member fixed to the seat back and comprising a bore slidingly and snugly supporting the at least one support rod;
a latching spring supported by the guiding member and having two ends, one of which being fixed to the guiding member, and the other end being free and projects from the guiding member, and an intermediate, looped, notch engaging portion being normally biased to engage a portion of a notch;
at least one of said at least one support rod comprises a plurality of notches each lying in a plane which is perpendicular to a longitudinal axis of the rod and wherein a normal of the plane intersects said longitudinal axis;
the arrangement being such that axial displacement of the support rod in an upward direction entails lateral displacement of the notch engaging portion so as to disengage from the notch, and wherein downward displacement of the supporting rod is possible only upon laterally displacing the notch engaging portion by expelling the projecting end of the latching spring.

According to the present invention, the headrest may be upwardly adjusted by merely applying some vertical force on the headrest, whereas displacing the headrest downwards requires manually actuating of the support member, so as to release the support rod from engagement with the latching spring.

According to an embodiment of the present invention, the lowermost notch on said supporting rod extends at an inverted angle with respect to the other notches. In accordance with this preferred embodiment, the support rod may be retracted altogether from the guiding member only upon manual displacement of the latching spring.

In accordance with still another embodiment of the present invention, the free end of the latching spring is expellable in a direction of the lateral displacement of the notch engaging portion or in a second lateral direction being perpendicular thereto.

According to a modification of the present invention, the guiding member further comprises a stopper wall portion for preventing expelling of the free end of the latching spring in a second lateral direction being perpendicular to a direction of the lateral displacement of the notch engaging portion.

According to still a further embodiment of the invention, the latching spring further comprises a bracing portion intermediate the fixed end and the notch engaging portion, said bracing portion adapted for frictionally bracing an arcuate portion of the support rod when the notch engaging portion is engaged with a notch, and disengaging the rod upon lateral displacement of the notch engaging portion.

Preferably, the latching spring further comprises at least one second looped portion restrained from displacement in the direction of the longitudinal axis, for preventing torsion of the latching spring.

### BRIEF DESCRIPTION OF THE DRAWINGS

For better understanding, the invention will now be described by way of example only, with reference to the accompanying drawings, in which:
**Fig. 1** is a partially sectioned perspective view of a vehicle seat assembly, comprising an adjustable headrest;
**Fig. 2** is a perspective view of the headrest support mechanism, in an enlarged scale;
**Fig. 2a** is a front elevation of the support rod seen in Fig. 2;
**Fig. 3** is an exploded perspective view of the headrest support and restraint mechanism, in accordance with the first embodiment of the present invention;
**Figs. 4a** and **4b** are sectional views along the lines IV-IV in Fig. 2, in the engaged and disengaged positions, respectively;
**Fig. 5** is an exploded view of a second embodiment of a headrest restraint mechanism, in accordance with the present invention; and
**Figs. 6** and **6b** are cross-sectional views along line IV-IV in Fig. 2 of a second embodiment of a headrest support and restraint mechanism in accordance with the present invention, in the engaged and disengaged position, respectively.

### DETAILED DESCRIPTION OF SPECIFIC EMBODIMENTS

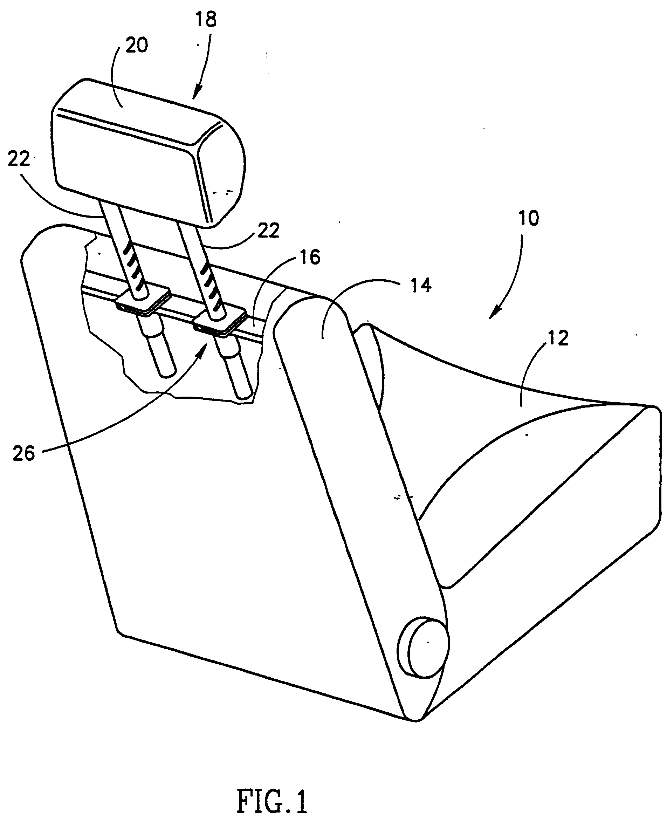

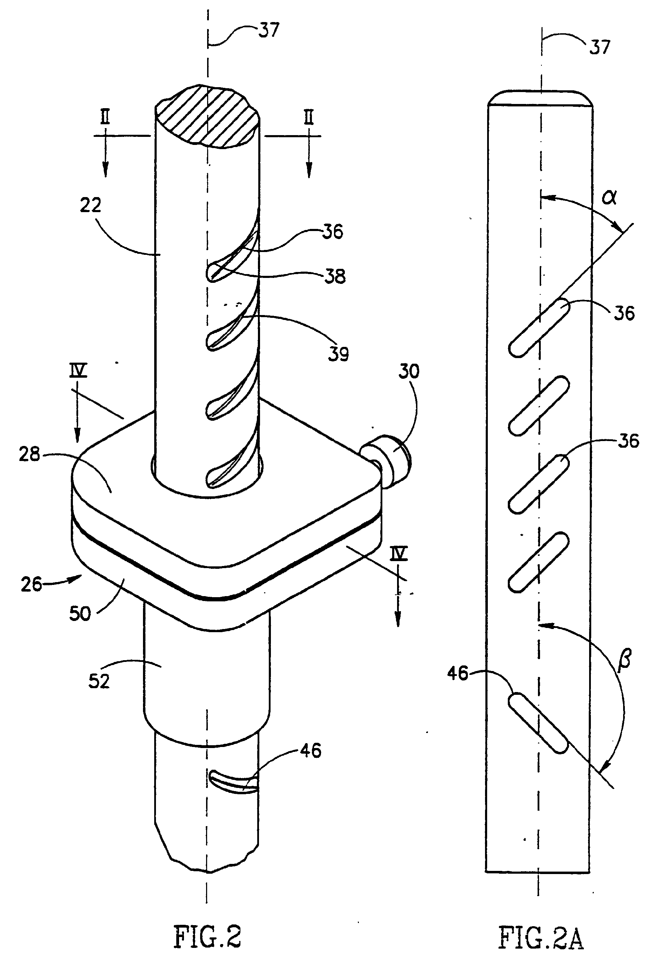

Attention is first directed to Fig. 1 of the drawings showing a vehicle seat assembly **10** comprising a seat portion **12** and a backrest portion **14** comprising a metal construction framework **16**. A headrest assembly generally designated **18** comprises a cushioned headrest **20** pivotally connected to two support rods **22**, each slidingly received by a guiding member **26** attached to the framework **16**, wherein the guiding member **26** is concealed within the seat, apart from atop cover **28** and an operating knob **30** (see Fig. 2).

As can be seen in more detail in Figs. 2 and 2a, support rod **22** comprises a plurality of notches **36**, each lying in a plane which is perpendicular to a longitudinal axis **37** of the rod and wherein a normal of the plane is not perpendicular to the longitudinal axis **37** and forms an acute angle α therebetween. Preferably the angle α is in the range of 45°±10°. It should be clear that either one or both support rods **22** are notched as seen in Fig. 2.

As can further be seen in Figs. 2 and 2a, a lowermost notch **46** lays in a plane extending at an angle β with respect to the longitudinal axis **37**, said angle β forming a complimentary angle with respect to angle α. However, angle β may be other than a complimentary angle as long as it forms an obtuse angle with the longitudinal axis **37**.

Guiding member **26** consists of a base portion **50** fitted with a downward projecting cylindric member **52** adapted for slidingly and snugly supporting the rod **22**. As mentioned hereinbefore, the guiding member **26** comprises a top cover **28** attached to the base **50** which is concealed within the upholstery of the seat **10.**

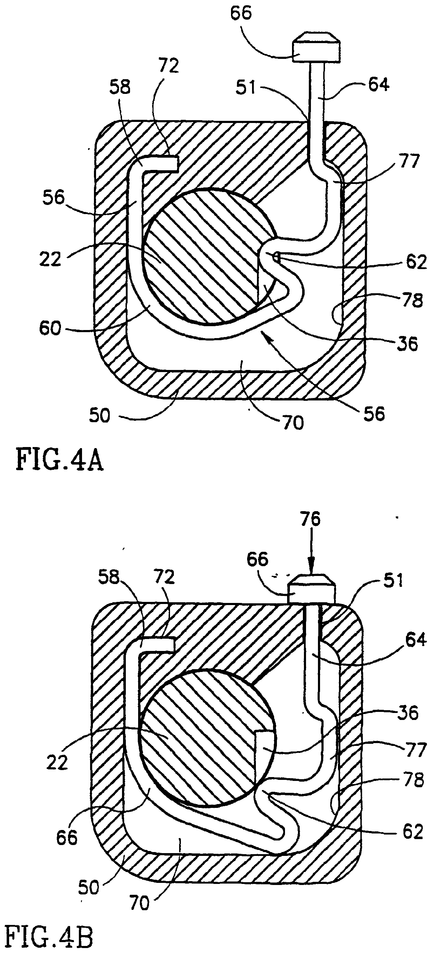

Further reference will now be made to Figures 4a and 4b in which a latching sping **56** has an end leg portion **58**, a first intermediate arcuate portion **60**, a second intermediate, looped, notch-engaging portion **62** and a second end portion **64** fitted with a pressing knob **66.** The base portion **50** of the guiding member **26** is formed with an opening generally designated **70** having a groove **72** for fixedly accommodating end leg portion **58** of the latching spring **56**. The opposed end **64** of the spring **56** projects from the base member **50** and in a normal position the notch engaging portion **62** of latching spring **56** projects over a top opening of the tubular section **52**, the arrangement being such that the second end portion **64** is capable of axial displacement only, in direction of arrow **76** (see Figure 4b), that owing to the direction of opening **51** in the base portion **50.**

The arrangement is such that displacement of pressing knob **66** in the direction of arrow **76** entails lateral displacement of notch engaging portion **62** away from the top opening of tubular portion **52** as in the position shown in Figure 4b.

The outcome is that vertical displacement of the support rod **22** in an upward direction applies a horizontal force component on the notch engaging portion **62** of the latching portion, whereby the notch engaging portion is laterally propelled into the position shown in Fig. 4b, where the notch engaging portion of the latching spring disengages from notch **36**. However, raising the headrest **18** is obtained by merely applying some vertical force on the head rest in an upward direction, so as to allow the latching spring to disengage the notches **36** in a "clicking" manner.

However, an attempt to apply vertical force on the headrest **18** and consequently on support rod **22** in a downward direction entails clamping engagement of the notch engaging portion **62** of spring **56** within the notch **36**, thus preventing downward displacement of the support rod.

The arrangement is such that removing rods **22** from the guiding member so as to remove the headrest **18** from the seat portion **14** is possible only upon manual expelling of knob **66** in the direction of arrow **76** so as to disengage the notch engaging portion **62** from the lowermost groove **46**.

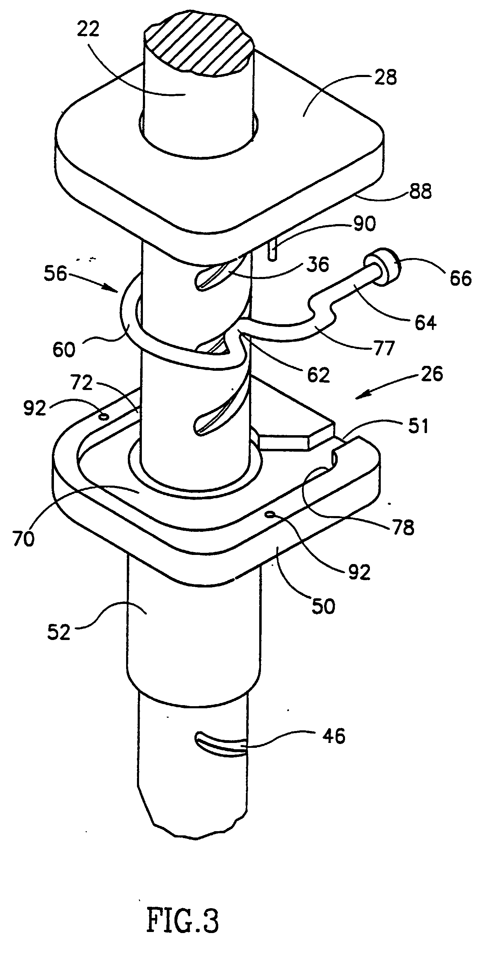

As can further be seen in Figures 3 and 4, the latching spring **56** comprises a second looped portion **77** adapted for sliding along an essentially straight inner wall **78** of base member **50**. The purpose of this arrangement is to ensure engagement of latch engaging portion **62** with a grove **36**, as in Figure 4a.

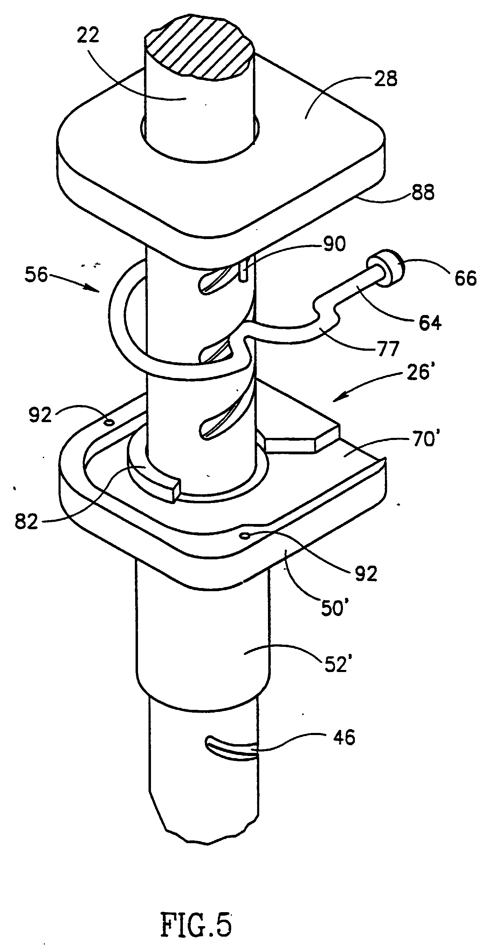

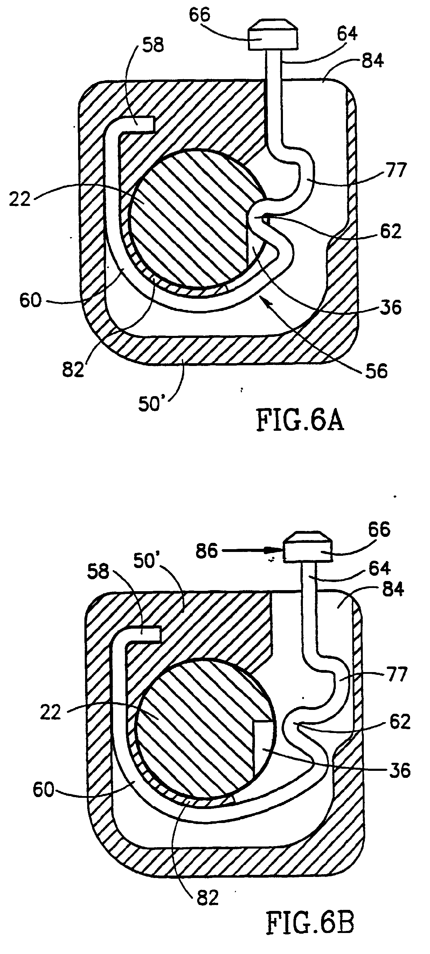

Further attention is now directed to Figs. 5 and 6, illustrating a further embodiment of the present invention and in which like elements and components are given the same reference numerals as the corresponding ones in Figs. 3 and 4 with a prime indication and unaltered elements are given the same reference numerals as in Figures 3 and 4. The reader is referred to those previous Figures for a detailed explanation.

The base portion **50'** of guiding member **26'** comprises a bearing wall **82** arcuately extending along a portion of the top opening of tubular portion **52'**. Additionally, projecting end **64** of the latching spring **56** projects through a wide opening **84** of the base member **50'** which enables lateral displacement of the projecting portion **64** also in a direction perpendicular to the direction of arrow **76** in Figure 4b.

The purpose of bearing wall **82** is to prevent friction engagement of bracing portion **60** of the latching spring **56**, with the rod number **22**, for smoother vertical displacement of the rod.

The arrangement according to this embodiment is such that displacing the headrest in an upward direction is carried out as explained with respect to Figs. 3 and 4. However, displacing the headrest in a downward direction is possible only upon manually expelling of knob **66** in the direction of arrow **86** or in the direction of arrow **76**, whereby the notch engaging portion **62** disengages from groove **36**, as can be seen in Fig. 6b.

Similar to the previous embodiment, the rod **22** comprises a lowermost notch **46** which is inclined at an inverted angle with respect to the other notches **36** for preventing unintentional removal of the head rest from the back rest portion of the seat.

As can be seen in Figures 3 and 5, the depth of openings **70** and **70',** respectively, is essentially the same as the diameter of the latching spring **56** and the bottom face **88** of cover **28** of the guiding member **26** is essentially flat and comprises several downward projecting pins **90** (only one seen in Figs. 3 and 5) adapted for insertion into suitable holes **92** in base portions **50** and **50'**, for correct positioning of cover **28** over base portion **50** and **50'**, respectively.

It will thus be appreciated that the second looped portion **77** serves also for preventing torsion of the latching spring **56** by opposing the moment applied by vertical forces from the rod **22** on the notch engaging portion **62**.

It should be obvious to a person versed in the art that the invention is not restricted to a wire-type latching spring and the same may be obtained by using other shapes and forms of a latching spring.

It should also be understood that the base member **50** and the top cover **28** of the guiding member **26** may be attached to one another in a variety of known ways e.g, sonic welding, adhering, snap fitting, screws, etc.

## Claims

1. An adjusting mechanism (**18**) for a head rest (**20**) supported by a seat back (**14**) of a vehicle seat (**10**), said adjusting mechanism comprising:
at least one support rod (**22**) for supporting the head rest (**20**);
a guiding member (**26**) fixable to the seat back (**14**) and comprising a bore slidingly and snugly supporting the at least one support rod (**22**);
a latching spring (**56**) supported by the guiding member (**26**) and having two ends (**58:64**), one of which (**58**) being fixed to the guiding member (**26**), and the other end (**64**) being free and projects from the guiding member (**26**) and an intermediate looped notch engaging portion (**62**) being normally biased to engage a portion of a notch (**36**);
at least one of said at least one support rod (**22**) comprises a plurality of notches (**36**), each notch lying in a respective first plane which is perpendicular to a longitudinal axis of the rod and wherein a second plane perpendicular to the first plane is fitted with respect to said longitudinal axis;
the arrangement being such that axial displacement of the support rod (**22**) in an upward direction entails lateral displacement of the notch engaging portion (**62**) so as to disengage from the notch, and wherein downward displacement of the supporting rod is possible only upon laterally displacing the notch engaging portion by moving the projecting end of the latching spring.

2. An adjustment mechanism according to Claim 1, wherein a lowermost notch (**46**) on said supporting rod (**22**) extends at an inverted angle (**B**) with respect to the other notches (**36**).

3. An adjustment mechanism according to Claim 1, wherein the free end (**64**) of the latching spring (**56**) is expellable in a direction of the lateral displacement of the notch engaging portion or in a second lateral direction being perpendicular thereto.

4. An adjustment mechanism according to Claim 1, wherein the guiding member (**26**) further comprises a stopper wall (**78**) portion for preventing expelling of the free end (**64**) of the latching spring (**56**) in a second lateral direction being perpendicular to a direction of the lateral displacement of the notch engaging portion.

5. An adjustment mechanism according to Claim 1, wherein the latching spring (**56**) further comprises a bracing portion (**60**) intermediate the fixed end (**58**) and the notch engaging portion (**62**), said bracing portion (**60**) adapted for frictionally bracing an arcuate portion of the support rod (**22**) when the notch engaging portion (**62**) is engaged with a notch (**36**), and disengaging the rod upon lateral displacement of the notch engaging portion.

6. An adjustment mechanism according to Claim 1, wherein the latching spring (**56**) bears against a bearing wall portion formed within the guiding member (**26**), said wall portion preventing inward directed lateral displacement of the notch engaging portion.

7. An adjustment mechanism according to Claim 1, wherein the latching spring (**56**) further comprises at least one second looped portion (**77**) restrained from displacement in the direction of the longitudinal axis, for preventing torsion of the latching spring.

8. An adjustment mechanism of a vehicle seat, substantially as hereinbefore described by way of example with reference to the description and accompanying drawings.

9. A support rod for a head rest of a vehicle's seat, the support rod (**22**) for being fixed at a top end thereof to the head rest (**22**) and for having a portion slidingly received within a seat back (**14**) of the seat (**10**), the support rod (**22**) characterized in that it comprises a plurality of notches (**36**), each lying in a respective first plane perpendicular to a longitudinal axis of the rod and wherein a second plane perpendicular to the first is fitted with respect to said longitudinal axis.

10. A support rod according to Claim 9, wherein a lowermost notch (**46**) of said supporting rod extends at an inverted angle with respect to the other notches (**36**).
